# EUROPEAN PATENT APPLICATION

(11) **EP 1 233 337 A2**
(43) Date of publication of application: **21.08.2002**
(21) Application number: 02250624.0
(22) Date of filing: 30.01.2002
(51) Int. Cl.: G06F 9/445

(54) **Peripheral devices which manage application upload to computing devices**

(30) Priority: 20.02.2001 US 789026
(71) Applicant: Hewlett-Packard Company, Palo Alto, CA 94304 (US)
(72) Inventor: Fischer, William A., Corvallis, OR 97330 (US); Fischer, Michael J., Corvallis, OR 97330 (US)
(74) Representative: Jackson, Richard Eric

(57) **Abstract**

A computing device (110, 3 10) generates a transaction request and transmits the transaction request to a peripheral device (10,210) by way of a wireless communications link. In response to the request, the peripheral device (10,210) determines the application required by the computing device (110, 3 10) which will enable the computing device (110, 3 10) to operate the peripheral (10, 2 10). The appropriate application is then transmitted to the computing device (110, 3 10) by way of the wireless communications or by way of an intervening wireless or wireline communications network (275). The computing device (110, 3 10) then uses the received application to operate the peripheral (10,210) according to the specialized application's instructions and the rules for their use.

## Description

### BACKGROUND OF THE INVENTION

The invention relates generally to the field of computing devices and, more particularly, to peripheral components used with computing devices.

In contemporary user environments, a peripheral device communicates with a particular computing device (such as a desktop computer, laptop computer, or handheld computer) by way of an application software package or a driver that generates lower level commands from more general instructions from the computing device. Generally, these applications are preloaded on the computing device after the user determines the specific type of peripheral device with which the computing device will communicate. This often requires the user to obtain specific knowledge regarding the manufacturer and model type of the peripheral device. When the user obtains this information, he or she must locate a disk (floppy or CD) that contains the application software needed to facilitate the interaction between the devices and then install the appropriate application on the computing device.

When a user brings a computing device into a new office environment, the user can often spend a substantial amount of time loading application software and other peripheral device management software to enable the computing device to communicate with the peripheral device in the new environment. This places a burden on the user in that he or she must acquire specific information about a peripheral device prior to using the device in a productive manner, such as to print a document, scan a document to place an image of the.document into the memory of the computing device, or otherwise communicate with the external device. Further, the user may need to draw on local expertise, such as information technology specialists in the new environment, to assist in interfacing the computing device with the peripheral device.

Therefore, it is desirable for peripheral devices to be capable of easily uploading an application or driver to a computing device. A method and apparatus which accomplish this function overcomes the shortcomings found in contemporary user environments and simplifies the process by which computing devices acquire software that enables operation of the peripheral device by the computing device.

### SUMMARY OF THE INVENTION

The invention is pointed out with particularity in the appended claims. However, at least some important aspects of the invention are summarized herein.

According to one aspect of the invention, a computing device establishes contact with a peripheral device by way of a wireless or wireline interface. The peripheral device then performs various method steps to upload an application, such as a communications driver, to the computing device. When the particular application has been uploaded to the computing device, the computing device begins transmitting to the peripheral device using the specialized instructions translated or generated by the received application, thus enabling the peripheral device to perform the particular task directed by the computing device.

According to another aspect of the invention, after an initial exchange with a peripheral device by way of a wireless or wireline interface, the peripheral device can direct the computing device to a network location such as Web site or other logical location where the computing device can acquire the desired application. The computing device can then begin transmitting to the peripheral device in accordance with the received application, thereby enabling the peripheral device to perform a particular task directed by the computing device.

A more complete understanding of the various aspects of the claimed invention may be acquired by reading the specification herein in conjunction with the figures, wherein like reference numerals refer to like elements.

### BRIEF DESCRIPTION OF THE DRAWINGS

Fig. 1 is a block diagram of a peripheral device in communication with a computing device by way of a wireless interface in accordance with a preferred embodiment of the invention;
Fig. 2 is a block diagram of a peripheral device in communication with a computing device by way of a wireless interface as well as a network interface in accordance with a preferred embodiment of the invention; and
Fig. 3 is a flowchart of a method performed by a computing device and a peripheral device for executing a task directed by the computing device in accordance with a preferred embodiment of the invention.

### DESCRIPTION OF THE PREFERRED EMBODIMENTS

A peripheral device that manages the upload of an application to a computing device enables a user to come into a new environment and quickly begin communicating with the peripheral device resident in the new environment. This removes the need for the user to spend significant amounts of time loading application software that enables communications with the resident peripherals. According to one aspect of the invention, Bluetooth technology and specifications can be used to facilitate the low-level interchange between a computing device and a resident peripheral. This enables a mobile computing device user to operate peripheral equipment, such as printers, multimedia devices, and other types of external equipment, without requiring the user to locate specific information regarding the peripheral so that the necessary application can be manually loaded.

In the context of the present invention, a "transaction request" is used to identify a first communications inquiry made by a computing device. It is contemplated that this request is directed toward a peripheral device when the computing device seeks to obtain a service from, or to otherwise interact with the peripheral device.

Additionally in the context of the present invention, a "task" is used to identify an activity that cannot readily be performed by the computing device without the service of the peripheral device. An example of a task, which is not intended to limit the claimed invention, is the printing of a file stored on the computing device by a peripheral device. A second example of a task might be conveyance of a user's personal phone book to a cellular communications device.

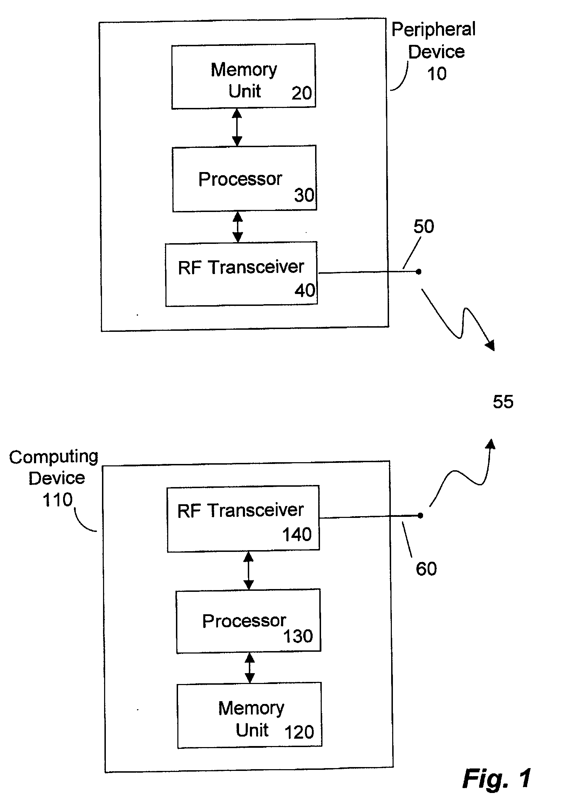

Fig. 1 is a block diagram of a peripheral device in communication with a computing device by way of a wireless interface in accordance with a preferred embodiment of the invention. In Fig. 1, peripheral device 10 can be a printer, cellular telephone, multimedia device, or other equipment designed to at least occasionally provide a service or feature while under the control of a computing device. Peripheral device 10 includes processor 30, which is coupled to memory unit 20 and RF transceiver 40. RF transceiver 40 is additionally coupled to antenna 50 to provide the peripheral device with a means of receiving and transmitting signals by way of communications channel 55. Fig. 1 further includes computing device 110, which includes processor 130 coupled to memory unit 120 as well as to RF transceiver 140. RF transceiver 140 is coupled to antenna 60, thereby enabling computing device 110 to communicate with peripheral device 10 by way of communications channel 55.

In a preferred embodiment, peripheral device 10 represents a resident peripheral device which offers a capability not possessed by computing device 110, such as printing, telephony, or multimedia presentation. When computing device 110 has the need for the use of peripheral device 10, a transaction request is generated by way of processor 130 and conveyed to RF transceiver 140. This request is transmitted by way of antenna 60 through communications channel 55 and received by way of antenna 60 of peripheral device 10. RF transceiver 40 demodulates and conveys baseband data to processor 30 indicating that computing device 110 has transmitted a transaction request.

When processor 30 interprets the transaction request received from computing device 110, the processor queries memory unit 20 in order to select the appropriate application which will permit computing device 110 to interact with peripheral device 10. Upon making this selection, processor 30 desirably formats the selected application and conveys the application to computing device 110 by way of RF transceiver 40 and antenna 50. This application is received by way of antenna 60 of computing device 110, converted to baseband data by way of RF transceiver 140, and interpreted within processor 130. In accordance with the specific command set and rules for their use included in the application, computing device 110 formats task information and transmit this task information to peripheral device 10. This allows peripheral device 10 to perform the task requested by computing device 110.

It is noteworthy to indicate that prior to transmitting the application to computing device 110, peripheral device may first determine that communications parameters, such as data rates, transmit power levels, and error control coding techniques, are not optimal for use with communications channel 55. Therefore, peripheral device 10 can transmit communications parameters to computing device 110 in order to ensure that an optimal communications capability exists between the two devices. Thus, in the event that communications channel 55 is excessively noisy, lossy, or otherwise undesirable, the parameters used to communicate between computing device 110 and peripheral device 10 can be adjusted to provide the best possible communications link.

In an alternate embodiment, RF transceiver 40, antenna 50, RF transceiver 140, and antenna 150 can be replaced with transceivers that enable communications through a wireline, point-to-point link, such as a dedicated serial or parallel interface. In this embodiment, peripheral device 2 10 and computing device 3 10 perform operations similar to those previously discussed, except that communications between the two device take place by way of a conductive media as opposed to communications channel 55.

In Fig. 1, memory units 20 and 120 can be any type of conventional magnetic or optical storage media. Suitable magnetic media include hard disks, while suitable optical media include compact discs and digital video discs. Processors 30 and 130 are contemplated to be standard processor units such as those used in contemporary computing devices. RF transceiver 40 and 140 can be a Bluetooth transceiver such as one offered by Signia Technologies, having a business address of 245 Sinclair Frontage Road, Milpitas, CA. Alternatively, RF transceiver 40 and 140 can enable communication in any other type of ad hoc wireless network, for example, IEEE 802.11 and HIPERLAN. In the context of Fig. 1, it is expected that RF transceivers 40 and 140 possess a built-in capability to exchange information in a rudimentary fashion. However this built-in capability may not extend beyond simple transactions that occur at a Physical or Data Link Layer as these terms are presently defined by the Open Systems Interconnection - Reference Model.

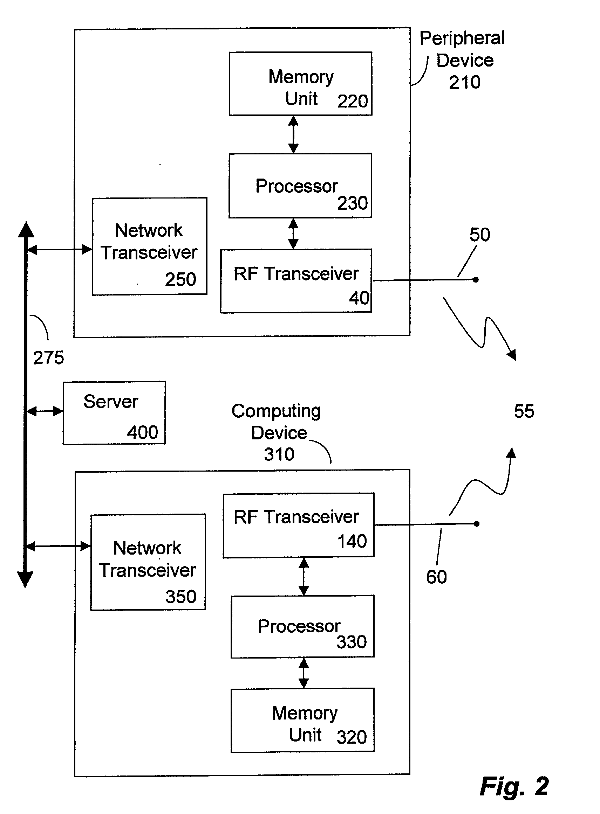

Fig. 2 is a block diagram of a peripheral device in communication with a computing device through a wireless interface in addition to a network interface in accordance with a preferred embodiment of the invention. In Fig. 2, peripheral device 210 represents a device such as a printer, multimedia display device, or other type of external equipment that provides a capability not possessed by computing device 3 10. When computing device 3 10 requires the use of peripheral device 2 10, a transaction request is generated within processor 330 and conveyed to RF transceiver 140. This request is transmitted by way of antenna 60 through communications channel 55 and received by antenna 50 of peripheral device 210. RF transceiver 40 demodulates the received signal and conveys the baseband data to processor 230, which then receives and decodes the information that computing device 3 10 has transmitted a transaction request.

When processor 230 interprets the transaction request received from computing device 3 10, peripheral device 2 10 queries memory unit 220 in order to select the appropriate application that will allow computing device 3 10 to communicate with peripheral device 10. As an example, peripheral device 2 10 can select from applications suitable for use within a version of the Windows operating system, perhaps a Linux operating system according to the particular needs of computing device 3 10. Further, peripheral device 210 may determine that only an update of an existing application is needed by computing device 3 10. In either case, upon making the selection, processor 130 desirably formats the application and determines the most efficient means of conveying the particular application to computing device 3 10. Processor 230 can select that the application be conveyed by way of network 275, or by way of communications channel 55.

Preferably, network 275 represents a system of interconnected computers linked by way of a conductive media. Thus, network 275 may communicate by way of a TCP/IP protocol for use with the Internet, or may communicate by way of a corporate local area network, such as a version of the Ethernet protocol. Alternatively, network to 50 may be representative of a wireless network that makes use of a Wireless Applications Protocol.

Peripheral device 2 10 may determine that the most suitable means of conveying the application from the peripheral device to computing device 3 10 includes the transmission of the application along network 275. Alternatively, peripheral device 210 may direct computing device 3 10 to access server 400. Upon establishing a connection with server 400, computing device 3 10 can then obtain the desired application without requiring the application to be directly transmitted from peripheral device 210. This technique can be advantageous in that it does not require peripheral device 2 10 to maintain a high-speed interface with network 275 for the purposes of transmitting the application to computing device 3 10. In either case, when the application is received by computing device 3 10 (by way of either network transceiver 350 or RF transceiver 140) processor 330 desirably makes use of this application in order to convey the necessary task to peripheral device 2 10.

It should be mentioned that the aspects of the invention can be practiced by removing either network transceiver 250 or 350 from Fig. 2. For example, in the event that network transceiver 250 is removed from peripheral device 2 10, the peripheral device establishes a connection to network 275 by way of computing device 3 10. Further, in the event that network transceiver 350 is removed, computing device 3 10 communicates with network 275 by way of peripheral device 2 10. Both of these alternatives may be desirable since only one of peripheral device 2 10 and computing device 3 10 need include an interface to network 275.

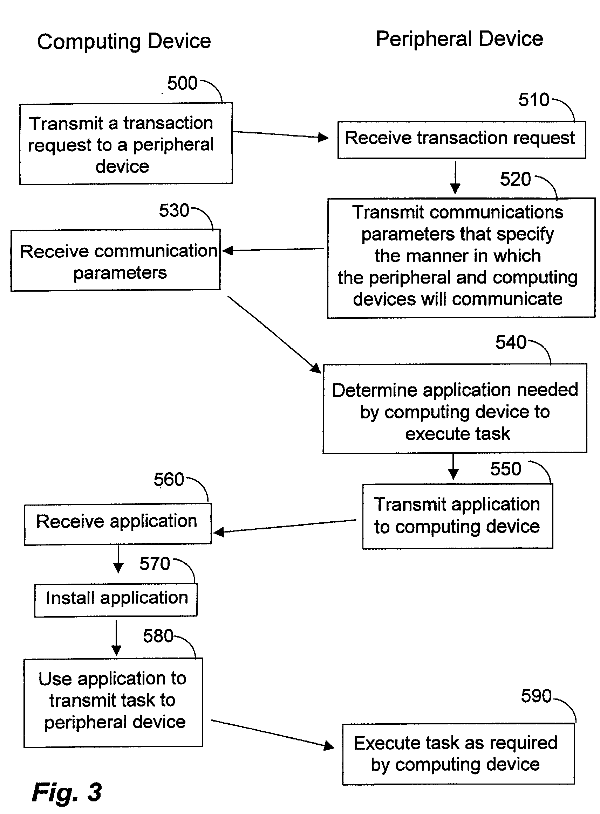

Fig. 3 is a flowchart of a method performed by a computing device and a peripheral device for executing a task directed by the computing device in accordance with a preferred embodiment of the invention. The apparatus of Fig. 2 is suitable for performing the method of Fig. 3. The method of Fig. 3 begins at block 500, where a computing device transmits a transaction request to a peripheral device. This transaction request represents an initial communications inquiry made by the computing device. It is contemplated that this request is directed toward a peripheral device when the computing device seeks to obtain a service from, or to otherwise interact with the peripheral device.

An example of a transaction request could be a communication that solicits information about peripherals within range of the computing device, or attached to the computing device. For example, in the event that a user intends to make use of a wireless mouse, the transaction request can represent a first communication of the computing device with the wireless mouse. In another example, where the peripheral device is a printer connected to the computing device by way of a cable, the transaction request can be a query to determine if, the printer is available to print a file.

At block 5 10, the peripheral device receives the transaction request. At block 520, the peripheral device determines if the communications parameters used by the computing device are optimized for the channel that exists between the peripheral and the computing devices. In the event that the communications channel is not optimal, peripheral device transmits communications parameters that specify the manner in which the peripheral device and the computing device will communicate. At block 530, the computing device receives the communications parameters. These parameters are applied at the proper layer, such as a Physical or a Data Link Layer as these terms are presently defined by the Open Systems Interconnection - Reference Model.

The method continues at block 540 where the peripheral device determines the application needed by the computing device to execute a particular task. This task may include a printing a file, for the case of the peripheral device being a printer, or may include the peripheral device performing another activity that cannot readily be performed by the computing device without the service of the peripheral device. The method continues at step 550, where the peripheral device transmits an application to the computing device. This transmission may occur by way of a direct wireless link, such as a Bluetooth link between the devices, by way of a connection that exists between one or more devices and a network, or by way of a direct serial or parallel connection.

At block 560, the computing device receives the application from a source external to the computing device. This source can be the peripheral device or from a particular network location. At block 570, the computing device installs the application into appropriate memory locations and uses the application, as in block 580, to transmit a task to the peripheral device. At block 590, the peripheral device executes the task as required by the computing device, such as printing a file. Block 590 may further include a level of file reformatting performed by the computing device so that the file can be transmitted in accordance with the particular instruction set of the selected application.

In the event that either or both of the computing devices and peripheral devices are interfaced to a network, blocks 520 and 530 are optional. It is anticipated that in a system environment which includes one or more connections to a network, the optimization of communications parameters as identified in the blocks 520 and 530 has already been performed. In the event that one or more network connections are present, blocks 520 and 530 may be replaced by a single block that represents determining a network location where the computing device can receive the desired application software. Desirably, this network location can be accessible through an interface to the World Wide Web, or may be a network location available within a corporate local area network. Further, the network location may be accessible by way of a wireless link that uses a wireless applications protocol. Block 530 of Fig. 3 can then be replaced by the peripheral receiving information sufficient to enable the peripheral device to execute a task. Preferably, the peripheral device receives this information in accordance with the particular instruction set of the selected application.

It should also be noted that if, in block 540, the peripheral device determines that the computing device is already in possession of application needed, the method can skip to block 580 and avoid the intervening blocks. This avoids the retransmission of an application that the computing device may already possess.

Blocks 500, 530, 560, 570, and 580, performed by the computing device of Fig. 3, can be encoded and stored on a program storage device that is readable by a computing device. Preferably, the program storage device tangibly embodies a program of instructions that are executable by the computing device to perform method steps that enable the computing device to receive an application from an external source, install the application, and subsequently use the application to interact with a peripheral device.

In conclusion, peripheral devices, which manage driver upload to computing devices, enable a user to come into a new environment and quickly begin communicating with the peripherals resident in the new environment. The invention can be used in conjunction with Bluetooth technology and specifications to facilitate low level interchange between a computing device and a resident peripheral. The method and apparatus enable a mobile computing device user to operate peripheral equipment, such as printers, multimedia devices, and other types of external equipment, without requiring the user to locate specific information regarding the peripheral so that the necessary driver can be manually loaded.

The foregoing description of the specific embodiments will so fully reveal the general nature of the invention that others can, by applying current knowledge, readily modify and/or adapt for various applications such specific embodiments without departing from the generic concept, and therefore such adaptations and modifications should and are intended to be comprehended within the meaning and range of equivalents of the disclosed embodiments.

It should be understood that the phraseology or terminology employed herein is for the purpose of description and not of limitation. Accordingly, the invention is intended to embrace all such alternatives, modifications, equivalents and variations as fall within the spirit and broad scope of the appended claims.

## Claims

1. A peripheral device (10,210) which executes a task directed by a computing device (110, 3 10), comprising:
a transceiver (40, 250), within said peripheral device (10,210) which receives a transaction request from said computing device (110, 3 10);
a processor (30, 230), coupled to said transceiver (40, 250), for determining an application which enables said peripheral device (10) to communicate with said computing device (110);
wherein,
said application is transmitted via said transceiver (40) to said computing device (10).

2. The peripheral device (10, 2 10) of claim 1 wherein said transceiver is interfaced to a network (275).

3. The peripheral device (10,210) of claim 2 wherein said network (275) is the Internet.

4. The peripheral device (10,210) of claim 1 wherein said transceiver (40, 250) enables said peripheral device (10,210) and said computing device (110, 3 10) to communicate via a wireless interface.

5. The peripheral device of claim 1 wherein said processor (30,230) is coupled to a memory unit (20,220) that stores said application and at least a second driver for a second computing device.

6. A computing device (110, 3 10) which directs a peripheral device (10, 2 10) to execute a task, comprising:
a transmitter (140) for transmitting a transaction request from said computing device (110, 3 10) to said peripheral device (10, 3 10);
a receiver (140) for receiving a driver from an external source, said application enabling said computing device (110, 3 10) to communicate details regarding said task with said peripheral device (10,210);
wherein,
said transmitter (140) for transmitting information from said computing device, wherein said information is formatted according said application, and wherein said information is sufficient to enable said peripheral device (10, 2 10) to execute said task.

7. The computing device (110, 3 10) of claim 6 wherein said receiver (140) additionally receives information which specifies the manner in which said receiver (140) will receive said application and the manner in which said transmitter (140) will transmit said information sufficient to enable said peripheral device (10, 2 10) to execute said task.

8. A computing device (3 10) which directs a peripheral device (210) to execute a task, comprising:
a first transmitter (140) for transmitting a transaction request from said computing device (3 10) to said peripheral device (2 10);
a receiver for receiving an application from an external source, said application enabling said computing device (3 10) to communicate details regarding said task with said peripheral device (210); and
a second transmitter (350) for transmitting information from said computing device (3 10), wherein said information is formatted according said application, and
wherein said information is sufficient to enable said peripheral device (2 10) to execute said task.

9. The computing device of claim 8 wherein said first transmitter (140) is a wireless transmitter.

10. The computing device of claim 8 wherein said second transmitter (350) interfaces to a network (275).
